(19) Europäisches Patentamt

**European Patent Office**

**Office européen des brevets**

(11) Veröffentlichungsnummer: **0 263 430 B1**

(12) **EUROPÄISCHE PATENTSCHRIFT**

(45) Veröffentlichungstag der Patentschrift: **03.04.91**

(21) Anmeldenummer: **87114256.8**

(22) Anmeldetag: **30.09.87**

(51) Int. Cl.⁵: **B60J 7/043**, B60J 7/11

(54) Sonnendach.

(30) Priorität: **09.10.86 DE 3634450**

(43) Veröffentlichungstag der Anmeldung:
**13.04.88 Patentblatt 88/15**

(45) Bekanntmachung des Hinweises auf die
Patenterteilung:
**03.04.91 Patentblatt 91/14**

(84) Benannte Vertragsstaaten:
**AT BE CH DE ES FR GB GR IT LI LU NL SE**

(56) Entgegenhaltungen:
**GB-A- 2 129 477**

(73) Patentinhaber: **Farmont, Rolf, Dr.**
**Hortensienstrasse 17**
**W-4000 Düsseldorf 30(DE)**

(72) Erfinder: **Farmont, Rolf, Dr.**
**Hortensienstrasse 17**
**W-4000 Düsseldorf 30(DE)**

(74) Vertreter: **Schumacher, Horst, Dr. Dipl.-Phys.**
**et al**
**Patentanwälte Dipl.-Phys. Dr. Peter Palgen**
**Dipl.-Phys. Dr. H. Schumacher Frühlingstras-**
**se 43A (Ecke Holunderweg)**
**W-4300 Essen 1(DE)**

# Beschreibung

Die Erfindung betrifft ein Sonnendach für Fahrzeuge mit einem einen Deckelrahmen bildenden ersten und zweiten Rahmen und einem öffen- und schließbaren Deckel, bei dem der Deckelrahmen durch Einklemmen der Dachhaut im Bereich des Öffnungsrandes zwischen dem ersten und zweiten Rahmen am Fahrzeugaufbau festlegbar ist und bei dem ein Klemmechanismus die Aufrechterhaltung der erforderlichen Klemmkräfte zwischen dem ersten und dem zweiten Rahmen ermöglicht.

Derartige Sonnendächer sind aus der DE-C- 32 41 652 bekannt. Als Klemmechanismus für diesen Zweck ist aus der DE-A- 35 45 973 eine rastende Klemmverbindung bekannt. Bei dieser greift entweder ein mit Rastnasen versehener Steg des einen Rahmens in einen korrespondierende Rastelemente aufweisenden Schlitz des Gegenrahmens rastend ein, um so die Klemmverbindung herzustellen, oder es wird ein besonderes, den Deckelrahmen umlaufendes Klemmprofil verwendet, das sich zwischen dem einen Rahmen und seinem Gegenrahmen einspreizt und so beide Teilrahmen des Deckelrahmens in deren die Dachhaut einklemmenden Endlage hält; oder aber man verrastet einen im Querschnitt C-förmigen ersten Teilrahmen mit einem zweiten Teilrahmen, der seinerseits mit einem dritten Teilrahmen verklebt, verschweißt, verschraubt oder verrastet wird. Bei diesem bekannten Sonnendach ist ein Verschrauben des ersten und zweiten Rahmens aufgrund der Klemmverbindung entbehrlich, doch ist es gleichwohl schwierig, bei der Montage die für das dauerhaft feste und dichte Festlegen des Deckelrahmens an der Dachhaut erforderlichen Klemmkräfte bei der Rahmenmontage aufzubringen, weil der erste und der zweite Rahmen mit den Fingern einer Hand in Einbaulage so stark gegeneinander gepreßt werden müssen, wie es die an der Dachhaut notwendige relativ hohe Klemmkraft erfordert, während mit der zweiten Hand das Klemmprofil in eine relativ schmale Rille bis zum Verrasten eingedrückt werden muß. Die Verwendung von punktuell zwischen dem ersten und zweiten Rahmen angreifenden und diese miteinander verbindenden Klemmwerkzeugen verbietet sich wegen der Beschädigungsgefahr an der Dachhaut bzw. dem für den Deckelrahmen bevorzugt verwendeten Kunststoffmaterial. Das umlaufende Klemmprofil kann zwar entfallen, wenn der erste und der zweite Rahmen unmittelbar miteinander verrastbar sind, so daß die Finger beider Hände des Monteurs für das Aufbringen der erforderlichen Klemmkraft verfügbar sind, doch wird dadurch die punktuell aufbringbare Klemmkraft nur geringfügig größer und es ist in Kauf zu nehmen, daß die Rastverbindung bei einer etwa notwendigen Demontage des Deckelrahmens zerstört wird und der Deckelrahmen nicht wiederverwendbar ist.

Davon ausgehend liegt der Erfindung die **Aufgabe** zugrunde, einen gattungsgemäßen Sonnenrahmen zu schaffen, der die vorerwähnten Nachteile nicht aufweist, bei dem insbesondere die erforderlichen Klemmkräfte bei der Montage besonders einfach und sicher von einem einzigen Monteur aufbringbar sind und ohne daß ein besonderes Klemmprofil erforderlich ist.

Erfindungsgemäß wird diese Aufgabe dadurch **gelöst**, daß der erste Rahmen auf seinem Umfang verteilte Durchbrechungen aufweist und der zweite Rahmen durch die Durchbrechungen des ersten Rahmens schiebbare und im Einbauzustand in eine Verriegelungsposition schwenkbare Hebel trägt, daß fernerhin die Hebel beim Verschwenken in die Verriegelungsposition an dem ersten Rahmen zur Anlage kommen und die erforderlichen Klemmkräfte zwischen dem ersten und zweiten Rahmen ausüben und daß schließlich Griffstücke zum Verschwenken der Hebel mit einem längeren Hebelarm als der Länge der Hebel entsprechend vorgesehen sind. Die Erfindung basiert demnach auf dem Grundgedanken, schwenkbare Hebel zu verwenden, mittels derer die erforderlichen Klemmkräft bei ihrem verschwenken aufgebracht werden.

Jeder dieser Hebel kann etwa die gleiche Klammkraft aufbringen wie die bisher üblichen Schrauben; im Gegensatz zu Schrauben müssen die erfindungsgemäßen Hebel in der Regel aber nur um $90^\circ$ verschwenkt werden. Die hierzu erforderliche Kraft kann ergonomisch günstig vom Monteur aufgebracht werden, da das bei den bisher bekannten Klemmverbindungen erforderliche Zusammenpressen der beiden Teilrahmen zwischen Daumen und den übrigen Fingern einer Hand entfällt. Insbesondere ermöglicht das erfindungsgemäße Griffstück eine relativ große Kraftverstärkung, so daß die von dem Hebel aufzubringenden vergleichsweise großen Klemmkräfte einen wesentlich geringeren Kraftaufwand am Griffstück erfordern.

"Sonnendächer" sind, im Sinne der Erfindung, alle Schiebe-und/oder Hebedächer mit lichtdurchlässigem oder lichtundurchlässigem schieb-und/oder hebbarem Deckel, sowohl für den werkseitigen als auch für den nachträglichen Einbau.

Die den Deckelrahmen gemeinsam bildenden "ersten und zweiten" "Rahmen" können, wie bevorzugt, jeweils umlaufend geschlossen oder aber mehrteilig, insbesondere aus einzelnen Rahmenstreben zusammengesetzt sein; ebenso fallen die in der DE-A- 35 45 973 sogenannten Trimmringe unter die erfindungsgemäß verwendbaren ersten und zweiten Rahmen. Das Rahmenmaterial kann unter anderem aus Metall, insbesondere Leichtmetall, oder aber - wie bevorzugt - aus Kunststoff, insbesondere faserverstärktem, bestehen. Vorzugsweise ist mindestens einer der beiden Rahmen ein ein-

stückiges, umlaufend geschlossenes Kunststoff-formteil. Einer der beiden (ersten oder zweiten) Rahmen kann mit dem Fahrzeugaufbau bereits werksseitig fest verbunden sein, er kann insbesondere einstückig von der Dachhaut gebildet sein - etwa wie in DE-A- 35 45 973 im Zusammenhang mit deren Figur 11 erläutert. Dann reduziert sich das Einklemmen der Dachhaut zu einem Verspannen der Dachhaut mit dem mit ihr nicht fest verbundenen (zweiten oder ersten) Rahmen.

Der erste und zweite Rahmen weisen vorzugsweise zumindest in unmittelbarer Nähe der Hebel korrespondierende Kontaktflächen senkrecht zur Spannrichtung auf, durch die die Klemmkräfte besonders wirkungsvoll auf die Dachhaut übertragen werden.

Als "Hebel" sind jede Art von schwenkbaren Hebeln geeignet. Die wirksame Hebellänge sollte möglichst gering sein; sie braucht nicht wesentlich größer zu sein als der Abstand zwischen der Schwenkachse des Hebels und dem Rand der Durchbrechung im ersten Rahmen, die der Hebel im Einbauzustand durchgreift. Unter anderem sind auch um eine Exzenterachse drehbare Exzenterstücke als schwenkbare Hebel verwendbar.

Unter "Einbauzustand" ist diejenige Situation zu verstehen, in der der erste Rahmen an der einen und der zweite Rahmen an der gegenüberliegenden Seite der Dachhaut anliegt und zwar unabhängig davon, ob beide Rahmen bereits gegeneinander verspannt sind oder noch nicht. Sobald die beiden Rahmen gegeneinander verspannt sind, befinden sich die Hebel in ihrer "Verriegelungsposition".

Als "Griffstücke" gelten mit den erfindungsgemäßen Hebeln kraft- oder formschlüssig verbindbare oder verbundene bzw. einstückig damit gebildete, in der Regel einarmige Hebel, an deren (freien) Ende die Kraft für das Schwenken des erfindungsgemäßen Hebels in die Verriegelungsposition angreift. Z. B. kann ein Schraubenzieher als Griffstück dienen, dessen Klinge in eine korrspondierende Ausnehmung eines Exzenterstückes in radialer Richtung eingreift. Nach einer anderen Ausführungsform der Erfindung ist das Griffstück mit dem Hebel dauerhaft, insbesondere einstückig, verbunden und taucht, vorzugsweise, in der Verriegelungsposition in einer Vertiefung des Deckelrahmens völlig oder so gut wie völlig unter, so daß störende Überstände am Deckelrahmen vermieden werden. Ebenso ist der Hebel vorzugsweise vollständig innerhalb des Deckelrahmenquerschnitts angeordnet, zumindest wenn er sich in der Verriegelungsposition befindet.

Wenn, gemäß einer anderen Weiterbildung der Erfindung, der Hebel oder das Griffstück in der Verriegelungsposition verrastbar ist, wird dadurch die Stärke der Klemmkraft exakter definierbar als bei einem - grundsätzlich möglichen - Reibschluß des Hebels in der Verriegelungsposition.

Die Montage des Deckelrahmens kann dadurch noch vereinfacht werden, daß gemäß einer anderen Weiterbildung der Erfindung, der Hebel vor dem Verschwenken in die Verriegelungsposition in eine Fixierposition bringbar ist, in der der erste und zweite Rahmen in ihrer gegenseitigen Position gehalten werden, insbesondere ohne daß wesentliche Klemmkräfte auf die Dachhaut des Fahrzeuges ausgeübt werden. Dadurch kann der allseits exakte Sitz des Rahmens kontrolliert werden, bevor die Dachhaut zwischen den beiden Teilrahmen eingeklemmt wird; insbesondere kann der exakte Sitz der üblicherweise an der Dachhaut anliegenden Dichtungselemente überprüft werden, bevor diese sich unter der Klemmkraft verformen. Die Hebel werden insbesondere dadurch in die Fixierposition gebracht, daß sie um eine zur bevorzugt normal zur Dachhaut sich erstreckenden Einschubrichtung parallele Achse drehbar sind, oder daß sie um eine quer zur Schieberichtung sich erstreckende Schwenkachse schwenkbar sind, wobei dieselbe Schwenkachse verwendbar ist, um die der Hebel in seine Verriegelungsposition verschwenkt wird, oder aber der Hebel ist quer zur erwähnten Schieberichtung seitlich in die Fixierposition rückbar, oder aber er ist in Schieberichtung in die Fixierposition steckbar. In allen Fällen sollte der Hebel in der fixierposition, z. B. durch leichtes Einrasten, verharren können, ohne durch den Monteur in der Fixierposition festgehalten werden zu müssen.

Die vorgenannten, erfindungsgemäß zu verwendenden Bauteile unterliegen in ihrer Größe, Formgestaltung, Materialauswahl und techischen Konzeption keinen besonderen Ausnahmebedingungen, so daß die in dem jeweiligen Anwendungsgebiet bekannten Auswahlkriterien uneingeschränkt Anwendung finden können.

Weitere Einzelheiten, Merkmale und Voreile des Gegenstandes der Erfindung ergeben sich aus der nachfolgenden Beschreibung der zugehörigen Zeichnung, in der eine bevorzugte Ausführungsform eines erfindungsgemäßen Sonnendaches dargestellt ist. In der Zeichnung zeigen:

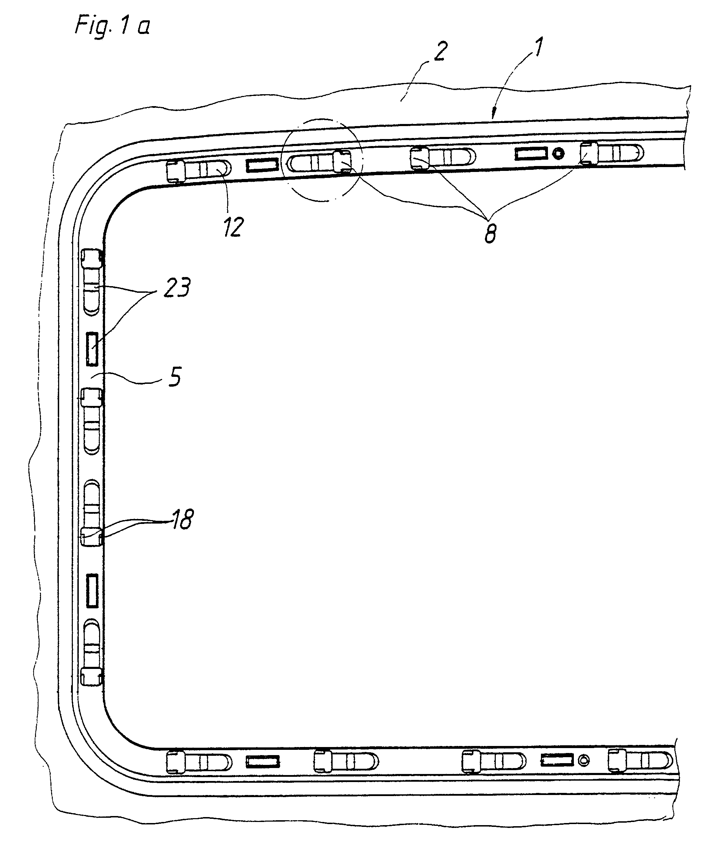

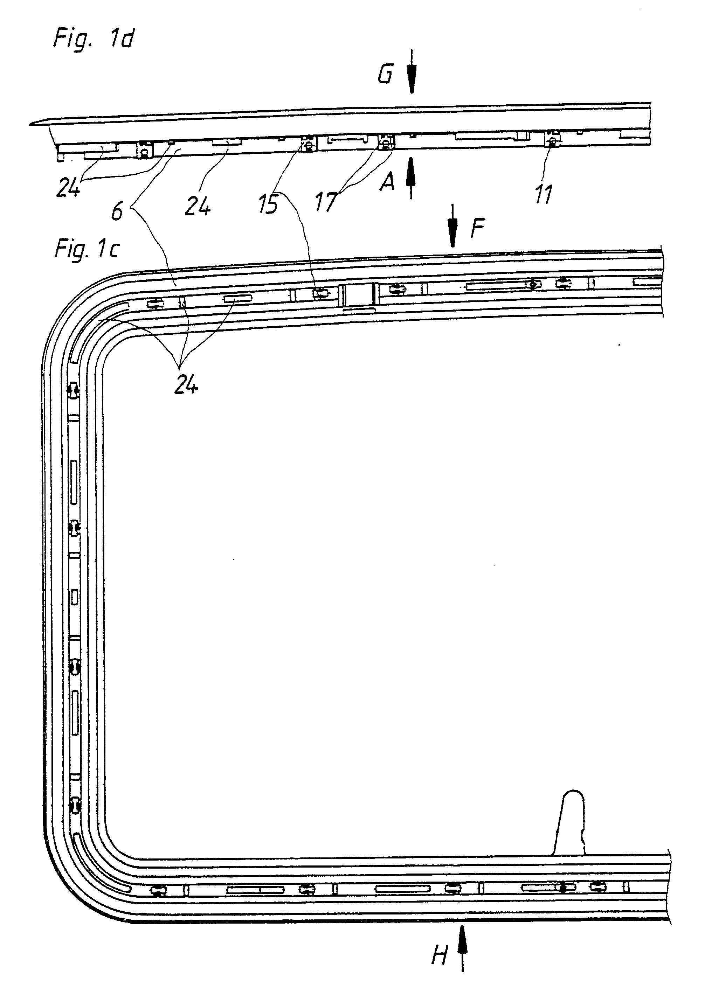

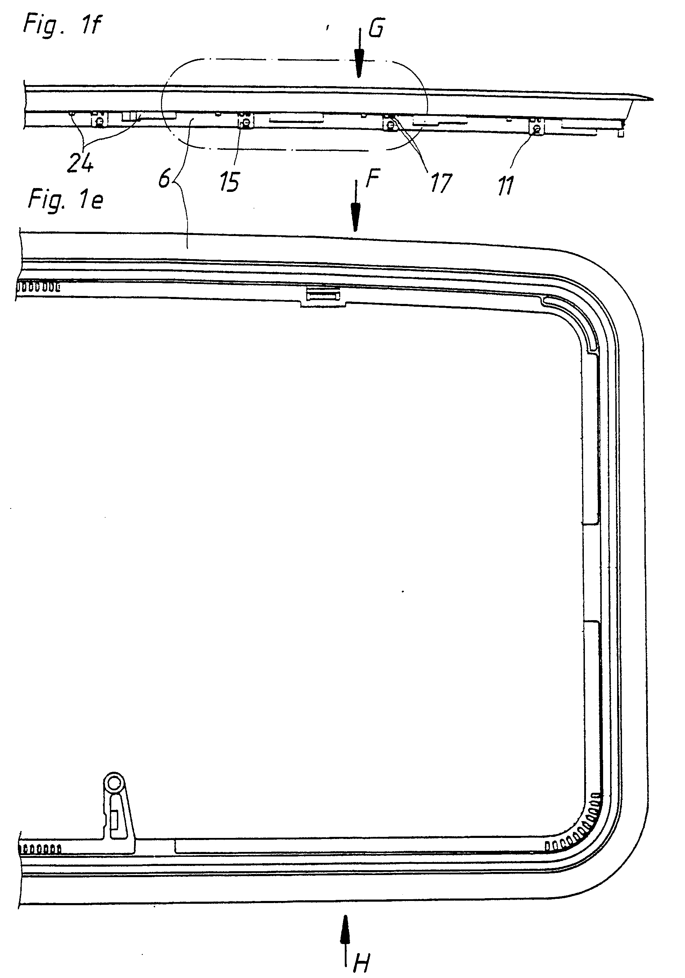

Fig. 1a ein in ein Fahrzeugdach eingebautes Sonnendach in Ansicht von unten, wobei lediglich der halbe Innenrahmen zu sehen ist, der hier der "erste" Rahmen ist;

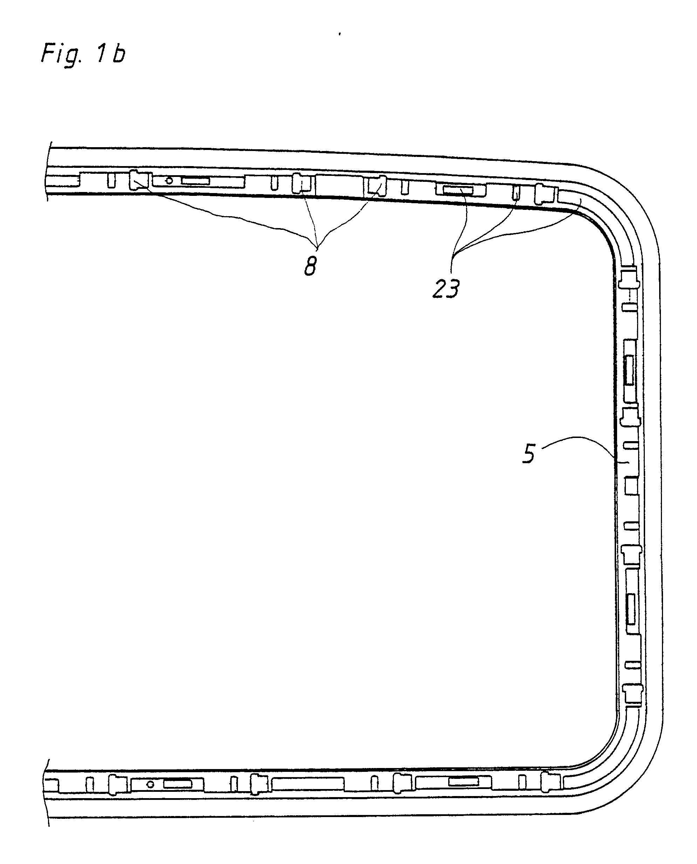

Fig. 1b von dem "ersten Rahmen (gemäß Fig. 1a) eine ausschnittsweise Darstellung derselben Rahmenhällte in Ansicht von oben;

| Fig. 1c | von demselben Sonnendach der halbe Außenrahmen, der hier der "zweite" Rahmen ist, in Ansicht von unten (Ansicht A gemäß Fig. 1d); |
|---|---|
| Fig. 1d | von dem Außenrahmen gemäß Fig. 1c eine Ansicht von vorne (Ansicht F gemäß Fig. 1c); |
| Fig. 1e | von derselben Außenrahmenhälfte (wie in Fig. 1c/d) eine Ansicht von oben (Ansicht G gemäß Fig. 1d und 1f); |
| Fig. 1f | von demselben Außenrahmen eine Ansicht von hinten (Ansicht H gemäß Fig. 1c und 1e); |
| Fig. 1g | von dem Innenrahmen gemäß Fig. 1a eine vergrößerte Detaildarstellung (Ausschnitt), wobei der Außenrahmen (von der Bildrückseite her) bereits aufgesteckt ist - allerdings ohne den erfindungsgemäßen Hebel und das erfindungsgemäße Griffstück; |
| Fig. 1h | dasselbe Detail wie in Fig. 1g, jedoch mit Hebel und Griffstück - und zwar in der Verriegelungsposition; |
| Fig. 2a | von demselben Sonnendach gemäß Fig. 1a bis 1h eine vertikale Schnittdarstellung quer durch den Deckelrahmen (entlang der Linie IIa-IIa gemäß Fig. 3a), wobei der Innen- und Außenrahmen die Dachhaut bereits zwischen sich einklemmen, während die dargestellte Hebel/Griffstück-Kombination in die Verriegelungsposition noch nicht verschwenkt ist; |
| Fig. 2b | das Sonnendach in der gleichen Schnittdarstellung wie in Fig. 2a - allerdings mit einer in die Verriegelungsposition verschwenkten Hebel/Griffstück- Kombination (Schnitt entlang der Linie IIb-IIb gemäß Fig. 1h); |
| Fig. 3a | von demselben Sonnendach ein Vertikalschnitt entlang des Deckelrahmens in noch nicht verriegelter Position der Hebel/Griffstück-Kombination (Schnitt entlang der Linie IIIa- IIIa gemäß Fig. 2a) - allerdings ohne Deckel und Deckeldichtung; |

| Fig. 3b | dasselbe Sonnendach in der gleichen Darstellungsart wie in Fig. 3a - allerdings mit in Verriegelungsposition befindlicher Hebel/Griffstück-Kombination und in bezüglich Fig. 3a parallel versetzter Schnittdarstellung (Schnitt entlang der Linie IIIb- IIIb gemäß Fig. 1h und 2b) - wiederum ohne Deckel und De keldichtung; |
|---|---|
| Fig. 3c | von demselben Sonnendach eine weitere Schnittdarstellung entsprechend Fig. 3a und 3b - allerdings ohne Hebel/Griffstück-Kombination (Schnitt entlang der Linie IIIc- IIIc gemäß Fig. 1g); |
| Fig. 4a | von dem Innenrahmen gemäß Fig. 1a/b eine perspektivische Detailansicht; |
| Fig. 4b | von dem Außenrahmen gemäß Fig. 1f eine perspektivische Detailansicht - hier allerdings teilweise mit bereits montierten Hebeln/Griffstücken; |
| Fig. 5a bis c | von einem anderen Sonnendach einen Klemmechanismus in drei verschiedenen Hebelstellungen in schematischer Darstellung - ausschnittsweise; |
| Fig. 6a bis c | ein anderer Klemmechanismus in der Darstellungsform wie Fig. 5a bis c sowie |
| Fig. 7 | von einem anderen Sonnen- dach einen - hier ersten - Rah- men, der entweder einstückig mit der Dachhaut gebildet ist (links der strichpunktierten Linie) oder in anderer Weise mit der Dachhaut fest verbunden oder verbindbar ist (rechts der strichpunktierten Linie). |

Besonders bevorzugt wird Ausführungsform gemäß Figuren 1a bis 4b.

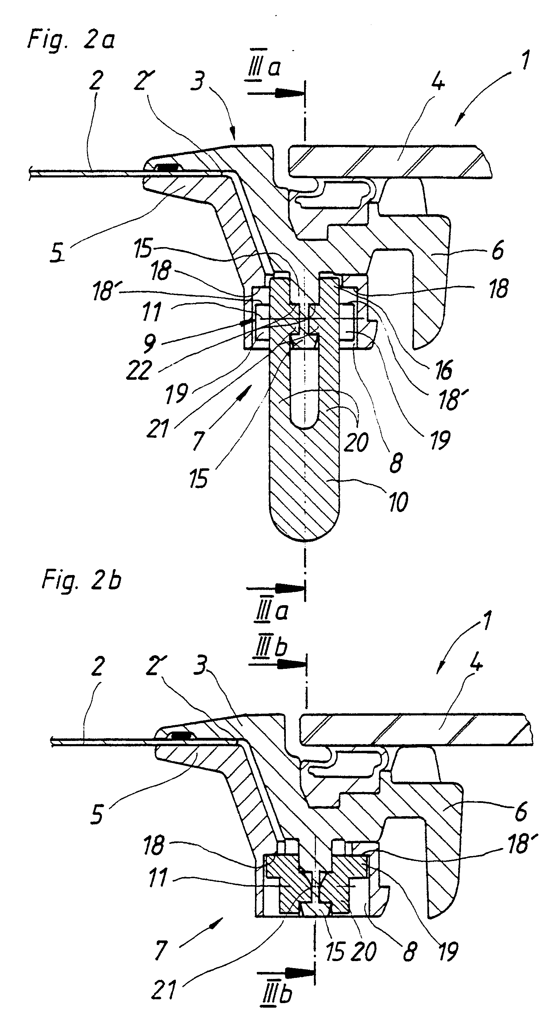

Gemäß Fig. 1a ist ein Sonnendach 1 in die Dachhaut 2 eines Fahrzeuges eingebaut. Das Sonnendach besteht aus einem Deckelrahmen 3 und einem in bekannter Weise öffen- und schließbaren, scheibenförmigen und mit der Dachhaut 2 annähernd eine gemeinsame Ebene bildenden Deckel 4 (siehe Fig. 2a/b). Der Betätigungsmechanismus des Deckels ist der Übersichtlichkeit halber fortgelassen, er kann z.B. so wie in der DE-C- 32 41 652 gestaltet sein.

Gemäß Figuren 2a/b besteht der Deckelrahmen 3 aus einem ersten und einem zweiten Rahmen. In dem in Figuren 1a bis 4b dargestellten Ausführungsbeispiel ist der erste Rahmen ein von unten mit der Dachhaut 2 verspannbarer Innenrahmen 5 und der zweite Rahmen ein von oben gegen die Dachhaut 2 verspannbarer Außenrahmen 6 - natürlich kann auch der Außenrahmen die Funktion des ersten Rahmens und der Innenrahmen die Funktion des zweiten Rahmens übernehmen (wie in Fig. 7)! - Die Dachhaut 2 ist also im Bereich des Öffnungsrandes 2' zwischen dem Außenrahmen 6 und dem Innenrahmen 5 wasserdicht und mechanisch stabil eingeklemmt (siehe Figuren 2a/b); auf diese Weise ist der Deckelrahmen also am Fahrzeugaufbau festlegbar.

Miteinander hinsichtlich ihrer Form korrespondierende und im Einbauzustand miteinander fluchtende und dementsprechend formschlüssig ineinandergreifende Formschlußelemente 23 und 24 am ersten bzw. am zweiten Rahmen gewährleisten eine positionsgenaue Montage der ersten und zweiten Rahmen.

Anstelle der bisher üblichen Schrauben zum Verspannen des ersten und zweiten Rahmens mit der Dachhaut treten - z.B. gleich viele - erfindungsgemäße Klemmvorrichtungen 7, die auf dem Umfang des Deckelrahmens 3 gleichmäßig verteilt sind, wobei die Eckbereiche 3' des Deckelrahmens bevorzugt frei von Klemmvorrichtungen 7 bleiben. Gleichwohl können ausreichende Spannkräfte auch in diesem Falle auf diese Eckbereiche ausgeübt werden. Hierzu sind die Schwenkachsen der nachfolgend noch zu erläuternden Hebel - wie bevorzugt - im wesentlichen rechtwinklig zur Erstreckungsrichtung der Rahmenstreben 3" des Deckelrahmens 3 angeordnet. Weiterhin weisen zu diesem Zweck die freien Enden der noch zu erläuternden Griffstücke 10 in der Verriegelungsposition von den Eckbereichen 3' des Deckelrahmens 3 fort, so daß die Schwenkachsen der Hebel unmittelbar am Übergang zwischen den Eckbereichen 3' und den Rahmenstreben 3" anordbar sind (siehe insbesondere Fig. 1a).

Der erfindungsgemäße Klemmechanismus, der zwischen dem ersten und zweiten Rahmen die erforderlichen Klemmkräfte aufrechterhält und erfindungsgemäß auch das eigentliche Verspannen des Deckelrahmens mit der Dachhaut ermöglicht, weist folgende Merkmale auf:

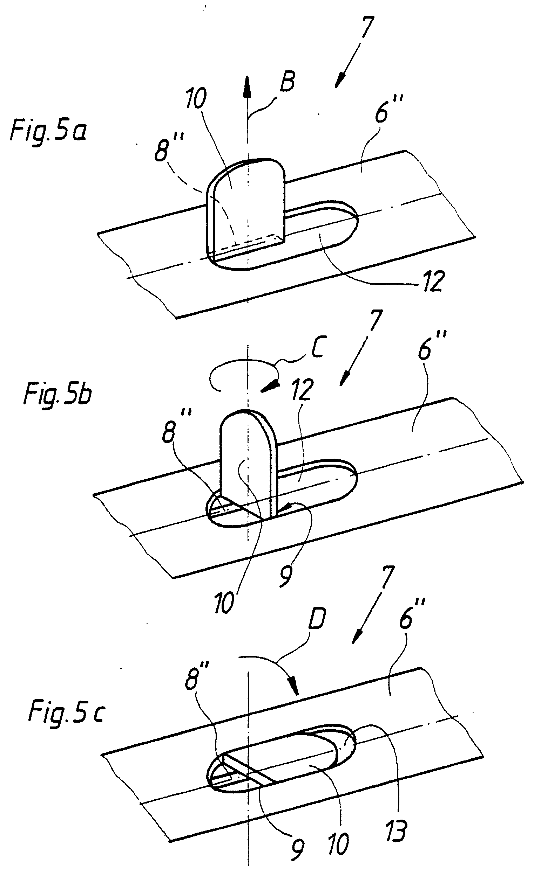

Der erste Rahmen (in dem in Figuren 1a bis 4b ausgeführten Ausführungsbeispiel - also der Innenrahmen 5) weist auf seinem Umfang verteilte Durchbrechungen 8 auf. Diese können als im Querschnitt mehreckige (wie aus Fig. 1a ersichtlich) oder runde Löcher durch den ersten Rahmen, aber auch als entsprechend geformte, z.B. U-förmige Randausnehmungen an dem von der Dachhaut 2 fortweisenden Innenrand des ersten Rahmens ausgeführt sein. Derartige innenrandseitige Durchbrechungen 8' in dem als erster Rahmen dienenden Außenrahmen 6' sind in der Ausführungsform gemäß Fig. 7 dargestellt. Auch bei den Ausführungsformen gemäß Figuren 5a bis 6c bildet der Außenrahmen 6" den im Sinne der Erfindung ersten Rahmen.

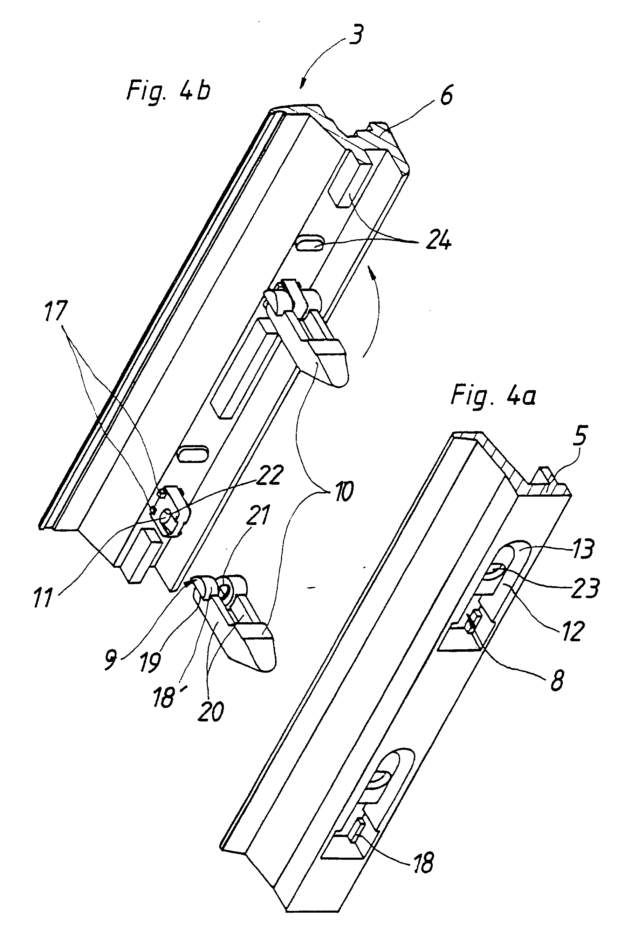

Der zweite Rahmen (in der Ausführungsform gemäß Figuren 1c bis 1f und 4b - also der Außenrahmen 6) weist Hebel 9 auf, welche derart auf dem Umfang des zweiten Rahmens verteilt sind, daß sie durch die Durchbrechungen 8, 8' des ersten Rahmens hindurchschiebbar sind. Diese Hebel wurden in Figuren 1c bis 1f der Übersichtlichkeit halber fortgelassen. Jeder Hebel 9 weist eine Schwenkachse 11 auf, die sich bevorzugt parallel zur Ebene der Dachhaut und etwa rechtwinklig zur Erstreckungsrichtung der Rahmenstreben 3' erstreckt. - Wie aus Fig. 7 ersichtlich, ist aber auch eine Erstreckung der Schwenkachse 11 in derselben Richtung wie Erstreckungsrichtung der Rahmenstreben 3" oder der Eckbereiche 3' möglich.

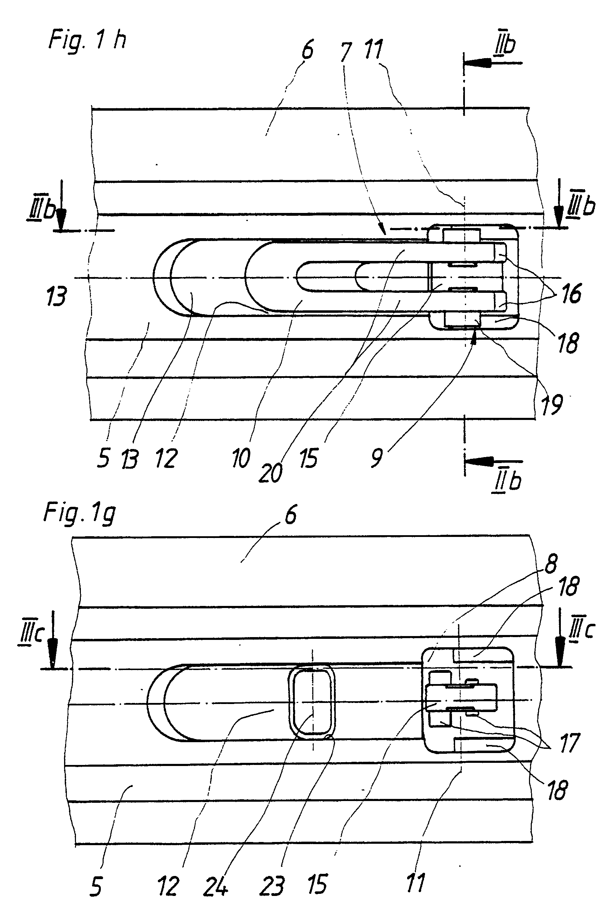

Im Einbauzustand des ersten und zweiten Rahmens, wie er vor allem aus Figuren 1h bis 3b ersichtlich ist, sind die Hebel 9 in eine Verriegelungsposition (wie sie in Figuren 1h, 2b und 3b sowie Figuren 5c und 6c dargestellt ist) um ihre an sich in beliebiger Weise gebildete Schwenkachse 11 schwenkbar.

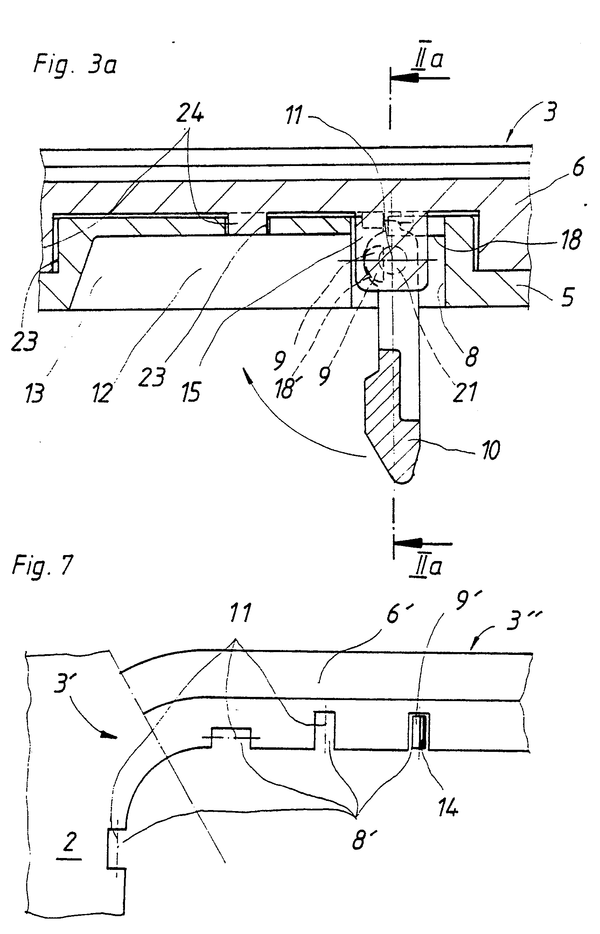

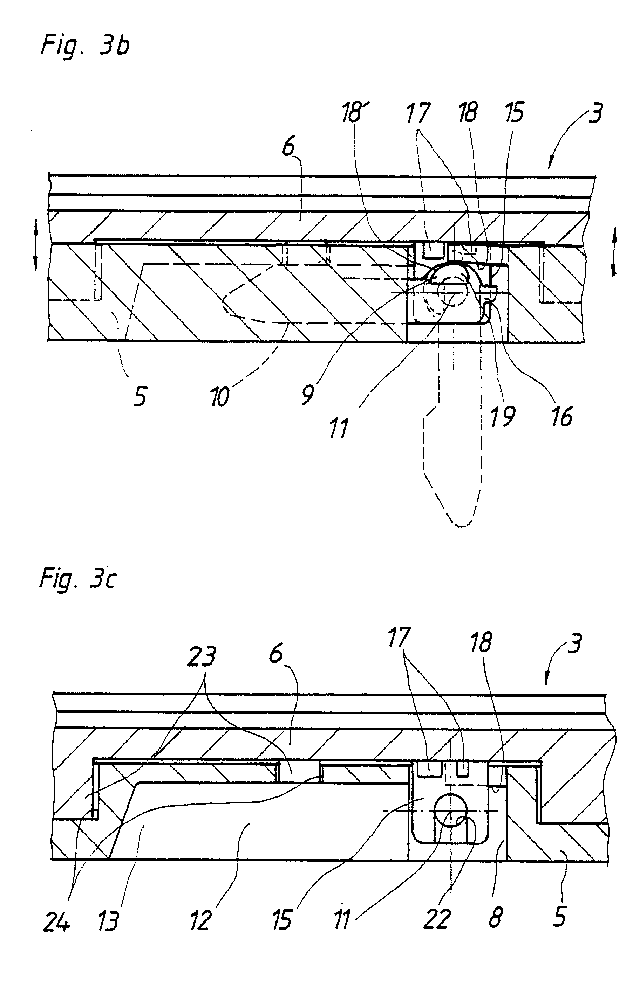

Die Hebel 9 kommen erfindungsgemäß beim Verschwenken (in die Verriegelungsposition) an dem ersten Rahmen, bevorzugt möglichst nahe am Rand der Durchbrechung 8 oder 8', zur Anlage. Beim weiteren Verschwenken üben sie dann eine - in der Regel zunehmende - Klemmkraft zwischen dem ersten und zweiten Rahmen aus. Hierzu dienen vorzugsweise als Gleitflächen 18 ausgeführte, paarweise angeordnete Verriegelungsdruckflächen am ersten Rahmen (Innenrahmen 5) und korrespondierende, in Schwenkrichtung des Hebels 9 gekrümmte Gleitflächen 18' am Umfang von Vorsprüngen 19, die beidseitig der Hebel 9 angeordnet sind und einen Teil der Hebel 9 bilden. Diese, einer Kurvenscheibe ähnlichen Vorsprünge haben etwa die Form eines Kreisabschnitts (Segmentes), der insgesamt neben der Schwenkachse 11 des Hebels 9 angeordnet ist und dessen Sehne sich etwa parallel zur Längsrichtung des Griffstückes 10 und des Hebels 9 erstreckt. Auf diese Weise können die Vorsprünge 19 bei senkrecht zum Deckelrahmen 3 weisenden Hebeln 9 (siehe Figuren 2a und insbesondere 3a) durch die breitesten Bereiche der Durchbrechungen 8 im ersten Rahmen 5 gesteckt werden. Beim Verschwenken des Hebels 9 in die Verriegelungsposition kommen dann die Gleitflächen 18 und 18' zur gegenseitigen Anlage und unter zunehmenden Anpreßdruck - wie vorangehend bereits erläutert - (siehe Figuren 2b und 3b).

Um das Zusammenfügen des ersten und zweiten Rahmens 5 und 6 zu erleichtern, sind am zweiten Rahmen 6 einerseits und an den Hebeln 9 andererseits miteinander korrespondierende Rastelemente 16 und 17 derart angeordnet, daß der Hebel 9 und die Griffstücke 10 in der senkrecht vom zweiten Rahmen 5 abstehenden Montagestellung (siehe Figuren 2a, 3a und 4b) verrastet sind, gleichwohl aber mit einzelnen Fingern einer Hand des Monteurs in die Verriegelungsposition verschwenkbar sind.

Die wirksame Länge des Hebels 9 ist bevorzugt so gering wie möglich. Um gleichwohl die erforderliche Klemmkraft aufbringen zu können, ist ein bevorzugt dauerhaft mit dem Hebel 9 verbundenes Griffstück 10 vorgesehen, welches in der Verriegelungsposition gemäß Figuren 1h und 3b in einer Vertiefung 12 eingetaucht ist. Eine Eingriffmulde 13 in Verlängerung der Vertiefung 12 gestattet ein Ergreifen des in Verriegelungsposition sich befindenden Griffstückes 10 mittels eines Fingers oder eines Schraubendrehers, wenn eine Entriegelung gewünscht ist. - Als Griffstück ist aber auch ein Schraubendreher geeignet, der in einen Schlitz 14 (siehe Fig. 7) eines als Exzenterstück 9' ausgebildeten Hebels zum Verschwenken in die oder aus der Verriegelungsposition eingreift. Die wirksame Länge des Griffstücks ist in jedem Fall länger als die wirksame Länge des Hebels 9.

Gemäß Figuren 1g bis 4b weist der zweite Rahmen mit ihm einstückig verbundene und durch die Durchbrechungen 8 des ersten Rahmens schiebbare Lagerzapfen 15 zum schwenkbaren Lagern des Hebels 9 und Griffstückes 10 auf. Bei dieser Ausführungsform bilden je ein Hebel 9 und ein Griffstück 10 gemeinsam einen zweiarmigen, um die Schwenkachse 11 schwenkbaren Hebel. Es hat sich als besonders vorteilhaft erwiesen, diese Hebel/Griffstück-Kombination als einstückiges, U-förmiges Formteil aus Kunststoff herzustellen und im Bereich der Schwenkachse 11 mit dem Lagerzapfen 15 am zweiten Rahmen zu verrasten. Dabei werden die U-Schenkel 20 des U-förmigen Formteiles federnd auseinandergedrückt, bis ihre Schwenklagerzapfen 21 mit korrespondierenden Schwenklagerzapfen-Aufnahmen 22 im Lagerzapfen 15 fluchten und entsprechend zurückfedern (siehe Figuren 2a/b und 4b).

In der Verriegelungsposition kann - gewünschtenfalls - die Lage des Griffstückes durch korrespondierende (in der Zeichnung allerdings nicht eigens dargestellte) einfache Rastelemente am Griffstück und am Deckelrahmen fixiert werden. Die Rastkräfte können wegen der verfügbaren Hebellänge äußerst gering sein. Zur Vermeidung aufwendiger Hinterschnitte in den bevorzugt als umlaufende einstückige Kunststofformteile gebildeten ersten und zweiten Rahmen, könnten von der Innenseite des ersten Rahmens her rechtwinklig sich erstreckende Vertiefungen als Rastelemente vorgesehen werden, die eine gemeinsame Seitenfläche mit den Vertiefungen zur Aufnahme der Griffstücke aufweisen.

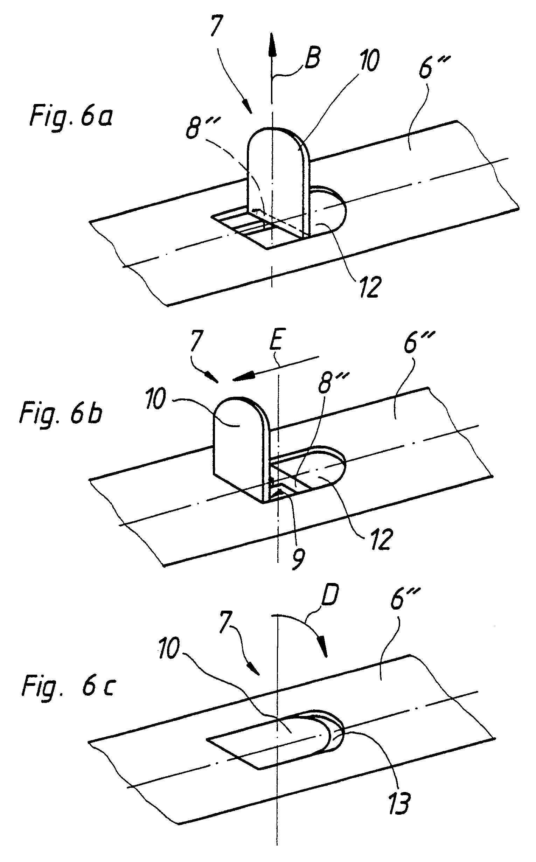

Bei den Ausführungformen gemäß Figuren 5a bis 6c wird der Hebel 9 und das mit ihm einstückig verbundene Griffstück 10 in gleicher Weise wie im Zusammenhang mit Figuren 1a bis 4b erläutert, durch eine entsprechende Durchbrechung 8″ geschoben. Wenn der erste und zweite Rahmen noch vergleichsweise lose an der Dachhaut anliegen, wird sodann der Hebel 9 mit dem Griffstück 10 um die Schieberichtung B als Drehachse herum in Richtung des Pfeiles C um bevorzugte 90° gedreht (Fig. 5b). Durch entsprechende Formgestaltung der Durchbrechung 8″ und des Griffstücks 10 sind der erste und der zweite Rahmen nach dem Verdrehen des Griffstücks 10 bereits fixiert. Beim dritten Schritt, dem Verschwenken (D) des Hebels 9 mit Hilfe des Griffstücks 10 in die Verriegelungsposition (Figuren 5c und 6c) wird die Klemmkraft aufgebracht. Entsprechendes gilt für die Ausführungsformen gemäß Figuren 6a bis 6c, gemäß der die Fixierung anstatt durch einen Drehvorgang des Griffstücks 10 durch einen Rückvorgang (E) gemäß Fig. 6b erfolgt.

Bezugszeichenliste

| | |
|---|---|
| 1 | Sonnendach |
| 2 | Dachhaut |
| 2' | Öffnungsrand |
| 3 | Deckelrahmen . |
| 3' | Eckbereiche |
| 3″ | Rahmenstreben |
| 4 | Deckel |
| 5 | Innenrahmen (erster Rahmen) |
| 6 | Außenrahmen (zweiter Rahmen) |
| 6' | Außenrahmen |
| 6″ | Außenrahmen |
| 7 | Klemmvorrichtung |
| 8 | Durchbrechungen |
| 8' | Durchbrechungen |
| 8″ | Durchbrechungen |
| 9 | Hebel |
| 9' | Exzenterstück |
| 10 | Griffstücke |
| 11 | Schwenkachsen |
| 12 | Vertiefungen |
| 13 | Eingriffmulden |
| 14 | Schlitz |
| 15 | Lagerzapfen |
| 16 | Rastelemente |
| 17 | Rastelemente |
| 18 | Gleitflächen |
| 18' | Gleitflächen |
| 19 | Vorsprünge |
| 20 | U-Schenkel |

| 21 | Schwenklagerzapfen |
| 22 | Schwenklagerzapfen-Aufnahmen |
| 23 | Formschlußelement |
| 24 | Formschlußelement |
| A | Ansicht |
| B | Schieberichtung |
| C | Drehrichtung |
| D | Schwenkrichtung |
| E | Rückrichtung |
| F | Ansicht |
| G | Ansicht |
| H | Ansicht |

**Ansprüche**

1. Sonnendach für Fahrzeuge mit einem einen Deckelrahmen (3) bildenden ersten und zweiten Rahmen und einem öffen- und schließbaren Deckel (4), bei dem der Deckelrahmen (3) durch Einklemmen der Dachhaut (2) im Bereich des Öffnungsrandes (2') zwischen dem ersten und zweiten Rahmen am Fahrzeugaufbau festlegbar ist und bei dem ein Klemmechanismus die Aufrechterhaltung der erforderlichen Klemmkräfte zwischen dem ersten und zweiten Rahmen ermöglicht, **dadurch gekennzeichnet, daß**

   a) der erste Rahmen auf seinem Umfang verteilte Durchbrechungen (8, 8', 8") aufweist und der zweite Rahmen durch die Durchbrechungen des ersten Rahmens schiebbare und im Einbauzustand in eine Verriegelungsposition schwenkbare Hebel (9) trägt,

   b) die Hebel (9) beim Verschwenken in die Verriegelungsposition an dem ersten Rahmen zur Anlage kommen und die erforderlichen Klemmkräfte zwischen dem ersten und zweiten Rahmen ausüben und

   c) Griffstücke (10) zum Verschwenken der Hebel (9) mit einem längeren Hebelarm als der Länge der Hebel (9) entsprechend vorgesehen sind.

2. Sonnendach nach Anspruch 1, dadurch gekennzeichnet, daß die Hebel (9) zumindest in der Verriegelungsposition vollständig innerhalb des Deckelrahmenquerschnitts angeordnet sind.

3. Sonnendach nach Anspruch 1 oder 2, dadurch gekennzeichnet, daß das Griffstück (10) mit dem Hebel (9) dauerhaft verbunden ist und in der Verriegelungsposition in einer Vertiefung (12) des Deckelrahmens (3) untertaucht.

4. Sonnendach nach einem der Ansprüche 1 bis 3, dadurch gekennzeichnet, daß der Hebel (9) oder das Griffstück (10) in der Verriegelungsposition verrastbar ist.

5. Sonnendach nach einem der Ansprüche 1 bis 4, dadurch gekennzeichnet, daß der Hebel (9) vor dem Verschwenken in die Verriegelungsposition in eine Fixierposition dreh-, schwenk-, rück- oder steckbar ist, in der der erste und zweite Rahmen in ihrer gegenseitigen Position gehalten werden.

6. Sonnendach nach einem der Ansprüche 1 bis 5, dadurch gekennzeichnet, daß die Schwenkachsen (11) der Hebel (9) rechtwinklig zur Erstreckungsrichtung der Rahmenstreben (3') angeordnet sind.

7. Sonnendach nach einem der Ansprüche 1 bis 6, dadurch gekennzeichnet, daß die Schwenkachsen (11) der Hebel (9) parallel zur Ebene der Dachhaut (2) angeordnet sind.

8. Sonnendach nach einem der Ansprüche 1 bis 7, dadurch gekennzeichnet, daß die Griffstücke (10) in der Verriegelungsposition mit ihrem freien Ende von den Eckbereichen (3") des Deckelrahmens (3) fortweisen.

**Claims**

1. A sun roof for vehicles having a first and a second frame forming a cover frame (3) and a cover (4) which can be opened and closed, in which the cover frame (3) can be secured by clamping the roof skin (2) in the region of the opening edge (2') between the first and the second frame on the vehicle body and in which a clamping mechanism allows the required clamping force to be maintained between the first and the second frame, **characterized in that**

   a) the first frame comprises openings (8, 8', 8") distributed over its periphery and the second frame carries levers (9) which can be pushed through the openings in the first frame and can be pivoted into a locking position in the fitted state;

   b) during the pivoting into the locking position the levers (9) come to rest on the first frame and they exert the required clamping force between the first and the second frame, and

   c) gripping members (10) are provided for pivoting the levers (9) with a longer lever arm than corresponding to the length of the levers (9).

2. A sun roof according to Claim 1, **characterized in that** at least in the locking position the levers (9) are arranged completely inside the cross-section of the roof frame.

3. A sun roof according to Claim 1 or 2, **characterized in that** the gripping member (10) is permanently connected to the lever (9) and in the locking position drops into a depression (12) in the roof frame (3).

4. A sun roof according to any one of claims 1 to 3, **characterized in that** the lever (9) or the gripping member (10) can be engaged in the locking position.

5. A sun roof according to any one of Claims 1 to 4, **characterized in that** before pivoting into the locking position the lever (9) can be rotated, pivoted, shifted or inserted into a fixing position, in which the first and the second frame are held in their mutual position.

6. A sun roof according to any one of Claims 1 to 5, **characterized in that** the pivot axes (11) of the levers (9) are arranged at right angles to the extension direction of the roof struts (3').

7. A sun roof according to any one of Claims 1 to 6, **characterized in that** the pivot axes (11) of the levers (9) are arranged parallel to the plane of the roof skin (2).

8. A sun roof according to any one of Claims 1 to 7, **characterized in that** in the locking position the gripping members (10) extend with their free ends away from the corner areas (3") of the roof frame (3).

**Revendications**

1. Toit pare-soleil pour véhicules automobiles comportant un premier et un deuxième cadres formant un cadre de capot (3) et un capot (4) pouvant être ouvert ou fermé, dans lequel le cadre de capot (3) peut être fixé, par serrage de la couverture de toit (2) dans la région du bord d'ouverture (2'), entre le premier et le deuxième cadres, sur la carrosserie du véhicule et dans lequel un mécanisme de serrage permet de maintenir les forces de serrage nécessaires entre le premier et le deuxième cadre, caractérisé en ce que :

    a) le premier cadre présente des ajours (8, 8', 8") répartis sur son pourtour, et le deuxième cadre porte des leviers (9) pouvant coulisser à travers les ajours du premier cadre et pouvant pivoter, en position de montage, dans une position de verrouillage,

    b) les leviers (9) viennent s'appliquer contre le premier cadre, lors de leur pivotement dans la position de verrouillage et exercent les forces de serrage nécessaires entre le premier et le deuxième cadres et

    c) il est prévu des poignées (10) pour faire pivoter les leviers (9), avec un bras de levier plus long que la longueur des leviers (9).

2. Toit pare-soleil selon la revendication 1, caractérisé en ce que les leviers (9) sont placés totalement à l'intérieur de la section transversale du cadre de capot, au moins dans la position de verrouillage.

3. Toit pare-soleil selon la revendication 1 ou 2, caractérisé en ce que la poignée (10) est assemblée de manière durable avec le levier (9) et, en position de verrouillage, est dissimulée dans un creux (12) du cadre de capot (3).

4. Toit pare-soleil selon l'une des revendications 1 à 3, caractérisé en ce que le levier (9) ou la poignée (10) peuvent être bloqués dans la position de verrouillage.

5. Toit pare-soleil selon l'une des revendications 1 à 4, caractérisé en ce qu'avant de pivoter dans la position de verrouillage, le levier (9) peut tourner, pivoter, être replacé ou enboîté dans une position de fixation dans laquelle le premier et le deuxième cadres sont maintenus dans leur position réciproque.

6. Toit pare-soleil selon l'une des revendications 1 à 5, caractérisé en ce que les axes de pivotement (11) des leviers (9) sont perpendiculaires à la direction d'extension des entretoises de cadre (3').

7. Toit pare-soleil selon l'une des revendications 1 à 6, caractérisé en ce que les axes de pivotement (11) des leviers (9) sont parallèles au plan de la couverture de toit (2).

8. Toit pare-soleil selon l'une des revendications 1 à 7, caractérisé en ce que les poignées (10), en position de verrouillage, s'éloignent par leur extrémité libre des zones d'angle (3") du cadre de capot (3).

Fig. 1 a

Fig. 1b

Fig. 1d

Fig. 1c

Fig. 1f

G

24    6    15    F    17    11

Fig. 1e

H

EP 0 263 430 B1

Fig. 1 h

6  7  11  IIb

IIb  IIIb

13  16

18

19

5 13 12  10 20 15  9  IIb

Fig. 1g  6

8
18
IIIc  IIIc

17

18

5  12  24  23  15  11

13

Fig. 2a

Fig. 2b

Fig. 3a

24  11

3

6

18

5

23

8

13  12  23  15

9
18'  9

21

10

Fig. 7

11  6'  9'  3''

3'

3'

2

14

8'

Fig. 3b

Fig. 3c

Fig. 4b

Fig. 4a

Fig.5a

Fig.5b

Fig.5c

Fig. 6a

Fig. 6b

Fig. 6c